# DEMANDE DE BREVET EUROPEEN

(11) **EP 1 477 234 A2**
(43) Date de publication de la demande: **17.11.2004**
(21) Numéro de dépôt: 04291007.5
(22) Date de dépôt: 15.04.2004
(51) Int. Cl.: B05B 11/00

(54) **Ensemble pour le conditionnement et la distribution d'un produit, notamment sous forme d'un échantillon**

(30) Priorité: 16.05.2003 FR 0305901
(71) Demandeur: L'OREAL, 75008 Paris (FR)
(72) Inventeur: Albisetti, Nicolas, 92110 Clichy (FR); Winckels, Mathilde, 92110 Clichy (FR); Crosnier, Daniel, 76550 Offranville (FR)
(74) Mandataire: Schmit, Charlotte

(57) **Abrégé**

La présente demande concerne un ensemble (1) pour le conditionnement et la distribution d'un produit cosmétique comportant
i) un récipient (2) contenant le produit, le récipient étant délimité par un corps (3);
ii) un organe (20) mobile relativement au corps du récipient et apte, en réponse à une commande exercée manuellement sur une surface (21) d'un organe d'actionnement (90), à passer d'une première position à une seconde position, cet organe mobile comportant une première lèvre (100) pour coopérer avec une paroi intérieure (12) du corps, sur au moins une partie de son mouvement, et ainsi isoler à l'intérieur du récipient une dose de produit de manière à en provoquer la sortie au travers d'au moins un orifice de distribution (7). L'organe mobile comporte de plus une lèvre supérieure (25) apte à s'appliquer de manière étanche contre la paroi intérieure (12) sur au moins une partie de son mouvement de cette première position vers la seconde.

## Description

La présente invention a trait à un dispositif de conditionnement et de distribution sous pression, en particulier sous forme pulvérisée, d'un produit fluide. Plus particulièrement, l'invention concerne de préférence un pulvérisateur miniature, de préférence jetable, adapté au conditionnement sous forme d'un échantillon de produits cosmétiques, notamment de parfums. Le produit est de préférence liquide.

Des distributeurs de ce type sont décrits notamment dans les demandes de brevet FR-A-2 778 639, EP-A-0 761 314, FR-A-2 443 980, ou dans les brevets US-A-3 897 005, ou US-A-3 412 907. Tous ces dispositifs souffrent principalement d'au moins un handicap, lié soit à leur coût de fabrication, soit à leur facilité d'utilisation, soit à la qualité du spray qu'ils sont capables de générer.

En effet, les échantillons n'étant généralement pas destinés à la vente, leur coût de fabrication doit être aussi faible que possible. Il est donc important d'avoir des dispositifs dont les pièces soient aisément réalisables en grande série et dont le montage puisse être effectué de manière simple. En outre, ils doivent être en mesure de générer un spray dont la qualité soit aussi bonne que possible, et dont les caractéristiques soient aussi constantes que possible.

Par ailleurs, en particulier pour les parfums, il est connu de présenter de tels échantillons sous forme d'un récipient de petit volume (typiquement, 1,5 ml) comportant un corps cylindrique, notamment en verre, dont une extrémité est fermée par un fond. L'autre extrémité est ouverte et reçoit une pompe miniature, surmontée d'un organe d'actionnement comprenant un orifice pour la pulvérisation du parfum. Un tel système est décrit dans le document FR-A-2 646 408.

La pompe miniature, comme toute pompe équipant des récipients de dimensions plus importantes, comprend un corps de pompe à l'intérieur duquel se déplace un piston mobile entre une première position dans laquelle le corps de pompe est de volume maximal et une seconde position dans laquelle le volume du corps de pompe est minimal. Le corps de pompe est en communication sélective avec le récipient via un tube plongeur et un clapet d'admission, notamment sous forme d'une bille.

Lors de la phase de réduction du volume du corps de pompe, le clapet d'admission est fermé. En revanche, un clapet de sortie, situé en amont de l'orifice de distribution, est ouvert sous la pression du produit. Le produit est distribué sous forme pulvérisée.

Lorsque l'utilisateur relâche la pression exercée sur l'organe d'actionnement, le piston, sous l'effet d'un ressort, remonte dans la première position en créant une dépression à l'intérieur du corps de pompe. Dans cette phase, dite de remplissage, le clapet d'admission est ouvert sous l'effet de la dépression régnant à l'intérieur du corps de pompe, et le clapet de sortie est fermé. De même, pendant cette phase, un volume d'air correspondant au volume de produit transféré du récipient vers le corps de pompe, entre dans le récipient via un orifice d'évent approprié.

Ce système de récipient miniature équipé d'une pompe également miniature, bien que satisfaisant du point de vue de la simplicité d'utilisation pour le consommateur, et du point de vue de la qualité du spray obtenu, souffre d'un inconvénient majeur lié à son coût et à la complexité de la manipulation et du montage des composants de petites dimensions qui le composent.

Des dispositifs comportant un réservoir muni d'un orifice de distribution et surmonté d'un piston mobile permettent de pressuriser un produit contenu dans ce réservoir de manière à en provoquer la sortie par ledit orifice de distribution, sont connus du document US-A-5,709,320. Mais ces dispositifs mettent en oeuvre des pistons complexes et chers car munis respectivement de clapets anti-retour.

De plus, avec de tels dispositifs, à chaque actionnement du piston, l'intégralité du volume situé sous le piston est pressurisée de manière à distribuer une dose de produit. Le ratio entre la quantité d'air et la quantité de produit pressurisée évolue de facto à chaque actionnement, or ce ratio joue un rôle sur la qualité du spray obtenu. Le spray obtenu n'est pas reproductible. La puissance du jet et le diamètre du spray diminuent à chaque nouvel actionnement. Pour résoudre ce problème, il est connu de prévoir de plus grands réservoirs, et de les remplir en excès relativement au nombre de doses à délivrer, de manière à ce que le ratio air/ produit reste supérieur à un niveau acceptable pendant toute la durée de vie souhaitée du produit. Mais cette solution pose un problème, car les dispositifs échantillons sont alors plus grands que prévus, et par ailleurs, plus de produit, généralement à forte valeur ajoutée, doit être inséré dans le dispositif pour le rendre fonctionnel, ce qui va à l'encontre de la démarche visant une réduction des coûts de ces échantillons, ensuite généralement distribués gratuitement.

Il est connu du document FR-A-2,393,279, un dispositif pour délivrer des doses précises et constantes de liquides. Le liquide contenu dans un réservoir d'un tel dispositif descend par gravité dans une chambre de dosage définissant le volume d'une dose de produit expulsé à chaque actionnement du bouton poussoir équipant ce réservoir. Le problème que pose ce type de dispositif est qu'il ne permet pas une vidange optimale du réservoir, notamment lorsque le produit est visqueux ou lorsqu'il a tendance à inclure des bulles d'air. En effet, de telles bulles d'air empêchent la réalisation de doses répétables. Notamment lorsque le liquide est un parfum comportant des huiles, alors la tension de surface du liquide relativement aux parois intérieures du dispositif est élevée. Si une bulle incluse dans le liquide est formée entre deux pièces du dispositif, en particulier au niveau d'un orifice débouchant dans la chambre de dosage, alors une telle bulle peut empêcher le remplissage en liquide de cette chambre de façon répétable et attendue. La dose de liquide délivrée n'est alors plus garantie.

Aussi, est-ce un des objets de l'invention que de réaliser un ensemble de conditionnement et de distribution, adapté en particulier au conditionnement et à la distribution sous pression de doses échantillons d'un produit, notamment cosmétique, et qui résolve en tout ou partie les inconvénients discutés ci-avant, en référence aux dispositifs conventionnels.

C'est en particulier un objet de l'invention que de réaliser un tel ensemble qui soit économique à réaliser et simple d'utilisation.

D'autres objets encore apparaîtront dans la description détaillée qui suit.

Selon l'invention, ces objets sont atteints en réalisant un ensemble pour le conditionnement et la distribution d'un produit, notamment cosmétique, ledit ensemble comprenant
i) un récipient contenant le produit, le récipient étant délimité par un corps dont une extrémité est fermée par un fond;
ii) un organe mobile relativement au corps du récipient et apte, en réponse à une commande exercée manuellement sur une surface d'un organe d'actionnement, à passer d'une première position dans laquelle une première lèvre de l'organe mobile est à distance non nulle d'une paroi intérieure, à une seconde position dans laquelle la première lèvre est en engagement avec ladite paroi intérieure,
caractérisé en ce que l'organe mobile comporte une lèvre supérieure apte à s'appliquer de manière étanche contre ladite paroi intérieure sur au moins une partie de son mouvement de la première position vers la seconde position, la coopération entre la première lèvre et la paroi intérieure permettant, au moins lors de la première utilisation, d'isoler une fraction dudit produit et de comprimer cette fraction de manière à en provoquer la sortie au travers d'au moins un orifice de distribution, le retour de l'organe mobile de la seconde position vers la première, lorsque cesse la commande d'actionnement, s'accompagnant d'une entrée d'air à l'intérieur du récipient.

A chaque actionnement, seule la fraction, ou dose, de produit, isolée du volume total de produit situé dans le récipient, au cours du passage de la première position à la deuxième position, est pulvérisée hors du dispositif.

Le volume total de produit à distribuer diminue à chaque nouvel actionnement. Mais la dose isolée de ce volume total de produit est, à chaque actionnement, reproductible, jusqu'à ce que le volume total de produit devienne inférieur au volume d'une dose. La pulvérisation est de nature identique à chaque actionnement. En effet, la coopération de la première lèvre avec la paroi intérieure permet la formation d'une chambre temporaire dans laquelle cette dose est pressurisée. De préférence, au moins au cours des premières pulvérisations, dans la mesure où le volume total restant de produit le permet, la chambre temporaire est uniquement remplie de produit, et le ratio air/ produit ne joue donc pas sur la pulvérisation du produit de la chambre temporaire. De plus, cette chambre temporaire se forme de manière mécanique et reproductible à chaque nouvel actionnement. Donc les pulvérisations obtenues sont homogènes pendant toute la durée de vie du dispositif, jusqu'à la vidange complète du produit qu'il renferme.

De préférence, pour former cette chambre temporaire, la paroi intérieure du récipient est configurée de sorte que, sur au moins une partie du mouvement de l'organe mobile entre lesdites première et seconde positions, la lèvre de l'organe mobile est en contact étanche avec la paroi intérieure du corps. Lorsque l'organe mobile est descendu de sa première position vers la deuxième, la lèvre est d'abord libre à l'intérieur du produit, puis vient, à partir d'une position intermédiaire, au contact de paroi intérieure, et est ensuite contrainte élastiquement contre elle. Cette contrainte augmente de la position intermédiaire en direction de la seconde position. A cet effet, le récipient peut présenter un rétrécissement de son pourtour intérieur, notamment à proximité du fond, la lèvre venant au contact de ce rétrécissement pour garantir le contact étanche, au cours de son passage de la première à la deuxième position.

Alternativement, le fond du corps du récipient peut présenter des moyens pour venir coopérer avec cette lèvre. Dans ce cas, le fond est de préférence rapporté et ils sont moulés aisément séparément.

Avantageusement, la paroi intérieure est de section transversale circulaire, la lèvre étant annulaire, la distance entre un axe longitudinal X de l'ensemble et ladite paroi intérieure diminuant, de préférence progressivement, en direction du mouvement de la première position vers la seconde.

Et ou alternativement, la paroi intérieure du corps comporte une autre lèvre pour coopérer avec un élargissement du pourtour extérieur de l'organe mobile, l'organe mobile étant configuré de sorte que, sur au moins une partie de son mouvement entre lesdites première et seconde positions, cette autre lèvre est en contact étanche avec le pourtour extérieur de l'organe mobile.

Contrairement au fonctionnement d'un corps de pompe conventionnel, le dispositif selon l'invention ne nécessite pas de phase d'amorçage pour assurer que la chambre du corps de pompe se remplisse. Dans les pompes classiques, après chaque nouvel actionnement, la remontée du moyen d'actionnement entraîne le remplissage de la chambre du corps de pompe en vue de la prochaine pulvérisation. Alors qu'avec un dispositif selon l'invention, l'intégralité du volume total de produit restant est maintenue dans le même réservoir. On ne risque pas la formation d'un gradient, ni la détérioration d'une fraction isolée du produit relativement au reste, comme cela peut être le cas avec les corps de pompe classiques.

Dans le cas de l'invention, il n'est pas nécessaire d'avoir un corps de pompe avec une chambre fixe, le simple déplacement de l'organe mobile de la première à la deuxième position permet la formation de la chambre temporaire, dans laquelle se trouve la dose de produit qui sera pulvérisée du fait de cet actionnement. L'enfoncement complet de l'organe mobile aboutit à une montée en pression du produit isolé dans cette chambre temporaire. De plus, cet enfoncement libère à partir d'un certain niveau d'enfoncement, au moins un canal d'amenée reliant la chambre temporaire à l'orifice de sortie. La dose de produit se trouve alors éjectée via ce canal pour être pulvérisé au niveau de l'orifice de sortie.

Pour que le produit puisse être pulvérisé, l'orifice de distribution du dispositif est en communication sélective, via un système d'ouverture/fermeture, entre le au moins un passage d'amenée et la chambre temporaire. Dans la pratique, la communication entre l'orifice de distribution et le passage d'amenée est établie après le passage par la position intermédiaire, et au plus tard lorsque l'organe mobile est dans la seconde position.

En particulier, le passage d'amenée peut être délimité entre un élément solidaire du corps du récipient, notamment obtenu de moulage avec ce dernier, et un élément solidaire de l'organe mobile, notamment obtenu de moulage avec ce dernier. Des parties de cet élément solidaire du corps du récipient et des parties de cet élément solidaire de l'organe mobile peuvent participer à la formation de la chambre temporaire. L'orifice de distribution est alors formé dans l'organe d'actionnement monté sur l'organe mobile, et le canal d'amenée est prolongé par un conduit ménagé entre l'organe mobile et l'organe d'actionnement jusqu'à l'orifice de distribution.

Dans ce cas particulier, le système d'ouverture/fermeture est alors également formé par la coopération d'un élément solidaire du corps du récipient, notamment obtenu de moulage avec ce dernier, et d'un élément solidaire de l'organe mobile, notamment obtenu de moulage avec ce dernier. En effet, le système d'ouverture/fermeture est de préférence dans la continuité immédiate du passage d'amenée.

En parallèle de ce mouvement de remontée de la deuxième position vers la première, la lèvre de l'organe mobile, permettant la formation de la chambre temporaire, se décolle de la paroi intérieure au niveau de la position intermédiaire, et le volume intérieur n'est plus divisé en deux volumes distincts.

Un tel ensemble peut être réalisé avec un nombre minimal de pièces. Alors que dans les systèmes classiques, le nombre de pièces peut aller jusqu'à 10.

De ce fait, avec l'ensemble selon l'invention, les opérations de montage sont réduites à leur strict minimum. Le coût de revient est extrêmement faible.

Le nombre de pulvérisations qu'il est possible de générer avec l'ensemble selon l'invention correspond au nombre entier de doses que contient le volume de produit. Les doses sont reproductibles. Par exemple, ce nombre peut être compris entre 10 et 20 doses, pour des volumes pulvérisés de l'ordre de par exemple 0,5 mL. Seul le volume restant, inférieur au volume d'une dose entière, ne pourra pas, a priori, être pulvérisé correctement hors du récipient. Cette perte de produit est minime.

De plus, dans ces pompes classiques, le volume de produit distribué est par exemple compensé soit par un orifice d'évent comme il a été décrit ci-avant, soit par une diminution de volume du récipient. Dans ce dernier cas, le fond est à position axiale non fixe, et remonte après chaque actionnement, un mécanisme anti-retour du type à crémaillère l'empêchant de reculer lorsque l'organe mobile passe de la première position à la seconde.

Avantageusement dans l'invention, le dispositif peut comporter un fond fixe. En effet, une dépression peut être tolérée dans le récipient selon l'invention, si le volume intérieur est tel que le ratio air/ liquide est de l'ordre de ¹/₃ à ²/₃. Du fait de ce ratio, la dépression créée dans le récipient après plusieurs actionnement n'a aucune incidence sur l'isolement d'une dose de produit dans la chambre temporaire, ni sur sa pulvérisation ultérieure. Dans une variante, une entrée d'air est envisageable en dehors de tout orifice d'évent, cette entrée étant obtenue du simple fait du mouvement de retour de l'organe mobile relativement au récipient.

En effet, la lèvre supérieure peut s'appliquer de manière étanche contre la paroi intérieure du récipient de manière à délimiter un volume intérieur du récipient, au moins dans la première position. Dans une variante, cette lèvre supérieure est présentée sur un pourtour extérieur de l'organe d'actionnement qui chapeaute l'organe mobile. Dans ce cas également, cette lèvre supérieure participe à l'étanchéité du dispositif au repos.

En particulier, lors du passage de la première position à la seconde, la coopération entre la lèvre supérieure et la paroi intérieure du récipient conduit à comprimer tout le produit et l'air contenu dans le réservoir. S'il y a des bulles d'air emprisonnées dans le produit, avec cette mise en pression, le produit étant généralement un liquide incompressible, il aura tendance à comprimer les bulles d'air qui y sont emprisonnées. Le volume de ces bulles d'air diminuera à mesure que l'organe mobile approchera de la seconde position, et leur remontée vers la phase gazeuse sera ainsi facilitée. Le risque d'isoler une fraction de produit comportant des bulles sera ainsi réduit.

Accessoirement, ladite paroi intérieure est configurée de sorte que, sur au moins une partie du mouvement de retour de l'organe mobile, ou de l'organe d'actionnement, de la seconde position vers la première, ladite lèvre supérieure n'est momentanément pas en contact étanche avec ladite paroi intérieure. Par exemple, la paroi intérieure peut comporter un ergot configuré pour rompre le contact étanche réalisé avec la lèvre supérieure. Suite au franchissement de cet ergot, au moins lors du retour de la seconde position vers la première, la rupture de l'étanchéité formée entre cette lèvre supérieure et ladite paroi permet l'entrée d'air à l'intérieur du récipient.

De préférence, cet ergot est placé à proximité de la seconde position, ainsi l'entrée d'air est permise dès que l'organe mobile quitte cette seconde position. A contrario, dans le cas où des bulles d'air auraient été emprisonnées dans le produit, et dans le cas où cet ergot serait également configuré pour entraîner une rupture de l'étanchéité lors du passage de la première position vers la seconde, étant donnée sa position à proximité de l'atteinte de la seconde position, le fonctionnement du dispositif permet de garantir l'absence de bulles même à ce stade dans le produit.

C'est précisément pendant cette période où la lèvre supérieure n'est pas en contact étanche avec la paroi intérieure du récipient que se produit l'entrée d'air à l'intérieur du volume intérieur. Cette entrée d'air permet d'éviter la création d'une dépression dans le réservoir.

Avantageusement, l'organe mobile est monté à ressort. Le retour de l'organe mobile de la seconde position vers la première résulte de l'action d'un moyen de rappel élastique. De préférence, ce moyen de rappel élastique est en compression entre le fond du récipient et l'organe mobile au moins dans la deuxième position.

Selon un premier mode de réalisation, le moyen de rappel élastique est obtenu de moulage avec le corps du récipient, et ou avec l'organe mobile. Dans ce cas, il est réalisé en POM (polyoxyméthylène) ou en polypropylène ou en polyéthylène, pour qu'il ait l'élasticité nécessaire à sa fonction.

Dans une variante, le moyen de rappel élastique est obtenu de moulage avec l'organe d'actionnement, ce dernier étant retenu sur le corps du récipient pour que le moyen élastique soit au moins comprimé dans la deuxième position.

Par exemple, le moyen de rappel élastique est configuré sous la forme d'un empilement d'au moins trois anneaux reliés deux à deux via deux entretoises diamétralement opposées, les entretoises séparant un premier anneau d'un second anneau adjacent au premier étant décalées à 90° par rapport aux entretoises séparant le second anneau d'un troisième anneau adjacent au second et disposé du côté du second opposé au premier.

En variante, le moyen de rappel élastique est constitué d'un ressort rapporté, notamment en plastique ou en métal, et disposé entre l'organe mobile et le fond du récipient.

Ainsi, lorsque l'utilisateur relâche la pression exercée sur la surface d'actionnement, l'organe mobile, sous l'effet du ressort, remonte axialement dans la direction opposée à celle du fond du récipient. Simultanément à ce mouvement de remontée, la lèvre supérieure de l'organe mobile, au fur et à mesure que la contrainte élastique radiale, à laquelle elle est soumise, diminue, tend à s'écarter radialement de l'axe de manière à rester en engagement avec la paroi intérieure du récipient. Toutefois, ce mouvement radial, en raison de l'inertie du matériau formant la lèvre supérieure, et de la légère dépression qui se crée lorsque s'amorce le mouvement de remontée, est moins rapide que le mouvement brusque de remontée. De ce fait, de l'air a le temps d'entrer à l'intérieur du volume variable avant que la lèvre supérieure ne fasse à nouveau étanchéité contre la paroi intérieure du récipient.

Pour obtenir une entrée d'air entre la paroi intérieure du récipient et la lèvre supérieure de l'organe mobile, différents paramètres peuvent être pris en compte, et ajustés l'un relativement à l'autre. Parmi ces paramètres figurent notamment :
i) le matériau formant la lèvre supérieure. Le matériau est choisi de sorte que le mouvement radial du bord libre de la lèvre supérieure sous l'effet de son élasticité soit plus lent que le mouvement de remontée de l'organe mobile. Un matériau de la famille des polyoléfines, par exemple le polyéthylène s'est révélé être satisfaisant. De ce fait, il est préférable que la lèvre soit présentée par l'organe mobile, car l'organe d'actionnement est généralement réalisé dans un autre matériau conférant d'autres caractéristiques techniques ;
ii) la configuration de la lèvre supérieure, en particulier son épaisseur ou son inclinaison au repos. Cette configuration a en effet a un impact sur le double mouvement relatif auquel elle est soumise lors du passage de la seconde position à la première;
iii) le profil de la paroi intérieure du récipient, et en particulier, la variation de distance entre cette lèvre supérieure et la paroi intérieure du récipient, entre les première et seconde positions; et
iv) l'élasticité du moyen rappelant l'organe mobile dans la seconde position. Son élasticité doit être suffisante pour provoquer une remontée rapide de l'organe mobile lorsque cesse la pression d'actionnement sur la surface d'actionnement

Avantageusement, ladite surface de l'organe d'actionnement est mobile selon une course supérieure à la course du reste de l'organe d'actionnement, la communication entre le passage d'amenée et l'orifice de distribution étant établie en réponse au mouvement de la surface de l'organe d'actionnement lorsque le reste de ce dernier est immobile axialement. A cet effet, la surface d'actionnement peut être bombée et être bordée annulairement d'une portion de moindre épaisseur, de manière à permettre une inversion du profil de la surface d'actionnement lorsque le reste de l'organe d'actionnement est immobilisé axialement.

La seconde position de l'organe mobile peut être déterminée par la mise en engagement d'une extrémité inférieure de l'organe mobile avec le fond du récipient, ou avec toute autre butée rencontrée par l'organe mobile ou par tout autre élément auquel l'organe mobile est couplé.

Dans l'hypothèse où la seconde position est déterminée par la mise en butée d'un bord annulaire de l'organe mobile avec le fond du récipient, il pourra être avantageux de prévoir que ledit bord annulaire soit crénelé, ou que le fond du récipient comporte des reliefs aptes à maintenir une communication entre le passage d'amenée et la chambre temporaire.

Le fond du récipient peut être un fond rapporté, la fixation du fond sur le corps du récipient pouvant être obtenue notamment par encliquetage, vissage, collage ou soudage. Dans cette hypothèse, un bouchon peut être obtenu de moulage avec le corps du récipient, le bouchon étant moulé en position ouverte et relié au corps par une bande de matière, ce bouchon étant prévu pour obturer une ouverture réalisée dans le fond du corps.

Avantageusement, l'orifice de distribution est alimenté par une pluralité de canaux à effet tourbillonnaire. Les canaux peuvent être creusés soit dans la partie du corps traversée par l'orifice de distribution, soit dans toute autre partie disposée en regard de l'orifice de distribution (organe mobile, pièce intermédiaire).

Avantageusement encore, avant la première utilisation, le moyen de rappel élastique est non comprimé dans le récipient, l'organe mobile et le récipient pouvant être maintenus dans une position préliminaire empêchant la compression du moyen de rappel élastique.

De préférence, le récipient peut comporter un cran d'encliquetage destiné à coopérer avec un profil complémentaire de l'organe mobile de manière à immobiliser cet organe mobile relativement au récipient avant la première utilisation.

L'invention consiste, mis à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 montre une vue assemblée d'un dispositif 1 selon l'invention;
- les figures 2a, 2b, 2c, 2d et 2e illustrent un premier mode de réalisation d'un ensemble de conditionnement et de distribution à différentes étapes de la distribution d'une dose de produit;
- les figures 3a, 3b, 3c sont relatives à un second mode de réalisation de l'ensemble de conditionnement et de distribution selon l'invention à différentes étapes de la distribution d'une dose de produit;
- les figures 4a, 4b, 4c sont relatives à un troisième mode de réalisation de l'ensemble de conditionnement et de distribution selon l'invention à différentes étapes de la distribution d'une dose de produit;
- les figures 5a et 5b sont relatives à une variante de réalisation d'un ressort disposé dans un tel ensemble de conditionnement et de distribution selon l'invention;
- figure 6a est relative à un quatrième mode de réalisation de l'ensemble de conditionnement et de distribution selon l'invention avant une première utilisation.

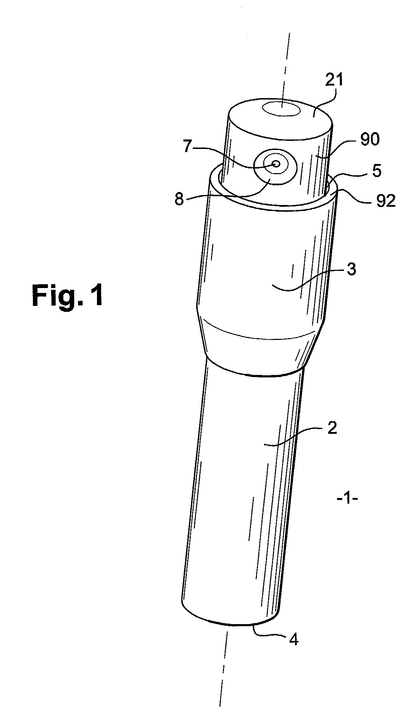

Tel que représenté sur la vue de la figure 1, le dispositif 1 selon l'invention comprend un récipient allongé 2 de forme cylindrique. Le récipient comprend un corps 3 dont une extrémité est fermée par un fond 4. L'autre extrémité 5 est ouverte. Le corps 3 est de préférence obtenu de moulage à partir de polypropylène.

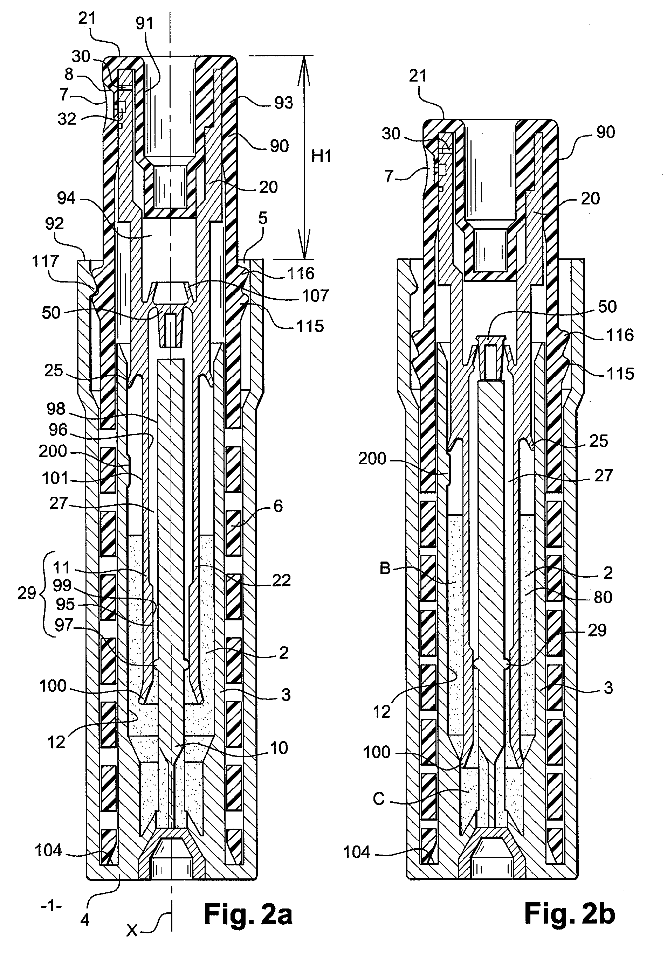

Figure 2a, à l'intérieur du corps 3 via son extrémité ouverte 5, est introduit un élément 20, qualifié par la suite d'organe mobile. L'organe mobile 20 est surmonté d'une surface transversale d'actionnement 21 d'un organe d'actionnement que l'on désignera de manière générale par la référence 90. Dans le cas où l'organe mobile 20 et l'organe d'actionnement 90 sont des éléments distincts, ils sont alors de préférence réalisés dans des matériaux différents. L'organe mobile 20 comporte des moyens pour être monté solidaire de l'organe d'actionnement 90. Par exemple, l'organe mobile 20 est inséré en force dans un relief complémentaire 91 de l'organe d'actionnement 90.

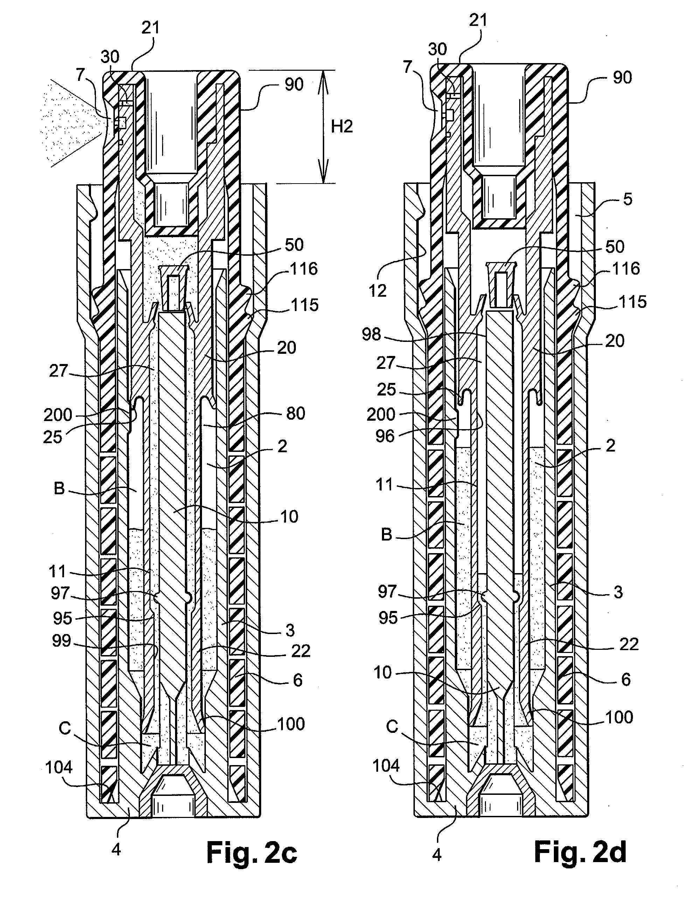

L'organe d'actionnement 90 est capable d'entraîner en translation, le long d'un axe d'allongement principal X du dispositif 1, l'organe mobile 20 relativement au corps 3. L'organe d'actionnement 90 et l'organe mobile 20 sont capable de se déplacer principalement entre deux positions:
- une première position, au repos, représentée sur les Figures 2a, 3a, et 4a, et
- une deuxième position, dite "enfoncée", dans laquelle la pulvérisation d'une dose de produit peut être obtenue, sur les figures 2c, 3b et 4b.

L'organe mobile 20 et l'organe d'actionnement 90 dépassent de l'extrémité ouverte 5. Dans la première position, l'organe d'actionnement 90 dépasse d'une hauteur H1 relativement à un chant 92 délimitant l'ouverture 5. Dans la deuxième position, Figure 2c, il dépasse d'une hauteur H2 inférieure à la première hauteur H1. L'organe d'actionnement 90 comporte une jupe 93 entourant l'organe mobile 20, cette jupe 93 étant traversée, dans sa partie continuellement visible, toujours dépassante de l'extrémité ouverte 5, par un orifice de distribution 7. Cet orifice de distribution 7 débouche au niveau d'un renfoncement 8 du pourtour extérieur de cette paroi. C'est depuis cet orifice 7 que le produit est pulvérisé.

Le fond 4 est de préférence muni d'un élément 10 s'étendant axialement le long de l'axe X dans le récipient 2, en direction de l'extrémité ouverte 5. L'organe mobile 20 comporte de préférence une jupe latérale tubulaire creuse 22 disposée à l'intérieur du récipient 2. Cette jupe 22 présente un diamètre intérieur légèrement supérieur à un diamètre extérieur de l'élément 10. Elle est d'ailleurs montée au moins en partie autour de cet élément 10. Lorsque l'organe mobile 20 est déplacé entre la première et la deuxième position, au moins une section de cette jupe coulisse le long de l'élément 10.

Un canal d'amenée 27 est ainsi défini à l'intérieur de la jupe 22, notamment entre cette jupe 22 et l'élément 10. Ce canal d'amenée 27 débouche dans une partie haute de la jupe 22. Notamment au niveau d'une section dans cette partie haute 94 de la jupe 22, dépassant de l'extrémité ouverte 5, un passage radial 30 traversant l'épaisseur de la jupe 22 permet de relier le passage d'amenée 27 à l'orifice de sortie 7.

Le canal d'amenée 27 présente de préférence un volume total réduit, et à cet effet, l'organe d'actionnement 90 comporte généralement une excroissance descendant à l'intérieur de cette jupe 22 pour en réduire le volume intérieur. Cette excroissance est de préférence le relief complémentaire 91. Par exemple cette excroissance correspond au moyen complémentaire permettant la fixation de l'organe mobile 20 sur l'organe d'actionnement 90.

Le dispositif 1 est de préférence muni d'un système d'ouverture et fermeture 29 de ce canal d'amenée 27. Ce système 29 est obtenu par une coopération entre un premier moyen 95 présenté sur le pourtour intérieur 96 de la jupe 22 et un deuxième moyen 97 présenté sur un pourtour extérieur 98 de l'élément 10. On détermine les hauteurs respectives de ces deux moyens, relativement aux positions que peut prendre la jupe 22 le long de l'axe X du fait des déplacements de l'organe d'actionnement 90 entre la première position et la deuxième position. De préférence, on choisit d'avoir le système 29 ouvert, pour des positions de la jupe 22, solidaire en translation de l'organe d'actionnement 90, proches de la deuxième position.

Selon le premier mode de réalisation, le premier moyen 95 consiste à prévoir la jupe 22 avec une paroi intérieure de diamètre intérieur variable selon la section relativement à l'axe X considérée. Le deuxième moyen 97 correspond alors à une excroissance latérale annulaire 97 présentée sur l'élément 10 pour venir au contact de la paroi intérieure 96, en fonction de la position de cette jupe 22 le long de l'axe X. La jupe 22 présente alors dans une partie inférieure 99 de diamètre intérieur inférieur au diamètre d'une partie intermédiaire 11 plus haute, relativement à l'axe X. Lorsque la jupe 22 est dans sa position haute, de repos, l'excroissance latérale 97 vient au contact de la partie inférieure 99, alors que dans la deuxième position, Figure 2c, l'excroissance latérale 97 n'est plus en contact avec la paroi intérieure 96, et le système 29 est ouvert. Dans cette deuxième position, l'excroissance latérale 97 est éventuellement en regard de la partie 11. La paroi intérieure au niveau de la partie 11 peut comporter par exemple des rainures longitudinales pour autoriser une ouverture limitée du système 29.

Et ou inversement, dans une variante, une excroissance est présentée sur le pourtour intérieur 96 de la jupe 22 pour coopérer avec la paroi extérieure 98 de l'élément 10, cette paroi présentant des sections de diamètre variable, et ou des parties lisses et ou nervurées.

Pour permettre la formation de la chambre temporaire, l'organe mobile 20 comporte sur un pourtour extérieur 101 de sa jupe 22 une lèvre 100 venant au contact d'une paroi intérieure 12 du corps 3 délimitant le récipient 2, notamment à proximité du fond 4, et plus particulièrement uniquement lors du déplacement de la première à la deuxième position. Cette paroi intérieure 12 peut être présentée par le pourtour intérieur cylindrique du corps 3, ou un relief aménagé de ce pourtour intérieur, ou une portion tubulaire 102 dépassant du fond 4, éventuellement rapporté sur le corps 3. Par exemple, et notamment dans le cas où le relief est aménagé, le diamètre intérieur défini par cette paroi intérieure 12 diminue en s'approchant du fond orthogonal à l'axe X.

Au cours du déplacement de la première position à la deuxième position, l'organe mobile 20 est descendu relativement à l'axe X, et au corps 3 qui reste fixe. Au cours de cette descente, comme on l'a vu précédemment, l'excroissance 97 coopère avec le pourtour intérieur 96 de la jupe 22, et en parallèle, la lèvre 100 vient également coopérer avec la paroi intérieure 12.

De préférence, on choisit, qu'au cours de ce déplacement de la première position en direction de la deuxième, la lèvre 100 vient en premier au contact de la paroi intérieure 12, alors que le système 29 est encore fermé, et que l'excroissance 97 maintient un contact hermétique avec l'élément 10. Le dispositif étant utilisé "tête en haut", le produit contenu dans le réservoir est stocké, sous l'effet de la gravité, au niveau du fond 4. La coopération de la lèvre 100 avec la paroi intérieure 12 permet d'isoler une dose de produit dans la chambre temporaire C déterminée entre cette lèvre 100 et le système 29 encore fermé. Cette chambre temporaire C est formée à partir d'une position intermédiaire, entre la première position et la deuxième position, de l'organe mobile 20, cf. Figure 2b. Lors d'un mouvement de la première position vers la deuxième, on atteint la position intermédiaire à partir du moment où la lèvre 100 vient au contact de la paroi intérieure 12.

Ensuite, en poursuivant le mouvement de descente de l'organe mobile 20 relativement au corps 3, la lèvre 100 reste au contact de la paroi intérieure 12, et la pression monte dans cette chambre temporaire C. Lorsque le système 29 se trouve enfin en position ouverte, la lèvre 100 étant toujours en contact étanche avec la paroi intérieure 12, le produit est alors éjecté sous pression dans le canal d'amenée 27, le passage radial 30 et enfin au travers de l'orifice de distribution 7. L'éjection du liquide commence avant d'avoir atteint la deuxième position. En effet, l'ouverture du système 29 est prévue à partir de position proches mais légèrement anticipées par rapport à l'atteinte de la deuxième position.

Pendant tout le temps de cette descente depuis la position intermédiaire jusqu'à la deuxième position, la lèvre 100 reste au contact de la paroi intermédiaire 12, et la pression de contact peut éventuellement augmenter. Il est en de même au cours du mouvement de remontée, où la lèvre 100 reste en contact avec la paroi intérieure 12 jusqu'au moment où elle atteint à nouveau cette position intermédiaire. Au-delà de cette position intermédiaire et jusqu'à retrouver la première position, la lèvre 100 est décollée de la paroi 12, la chambre temporaire a disparue, et le produit se répartit à nouveau uniformément au fond du récipient 2.

Pour maîtriser le volume défini dans la chambre temporaire, la hauteur à partir de laquelle la lèvre 100 vient en contact avec la paroi intérieure 12 est reproductible et contrôlée. A cet effet, la lèvre 100 présente une certaine tenue dans le produit de manière à ne pas se déformer sous les flux de produit au cours des mouvements entre la première et la deuxième position.

Comme il apparaît des premier, troisième et respectivement quatrième modes de réalisations présentés Figures 2a-2e ; 4a-4c et 6a, la lèvre 100 est définie de manière à former une jupe légèrement évasée du haut vers le bas autour de l'organe mobile 20. Et concernant le premier mode de réalisation, la paroi 12 propose une paroi chanfreinée rétrécissant le diamètre intérieur du récipient 2 en se rapprochant du fond 4. Concernant les troisième et quatrième modes de réalisation, la lèvre 100 coopère avec une paroi intérieure de la portion tubulaire 102 dépassant du fond 4. Cette portion tubulaire 102 peut être présentée sur un élément rapporté obturant le fond 4.

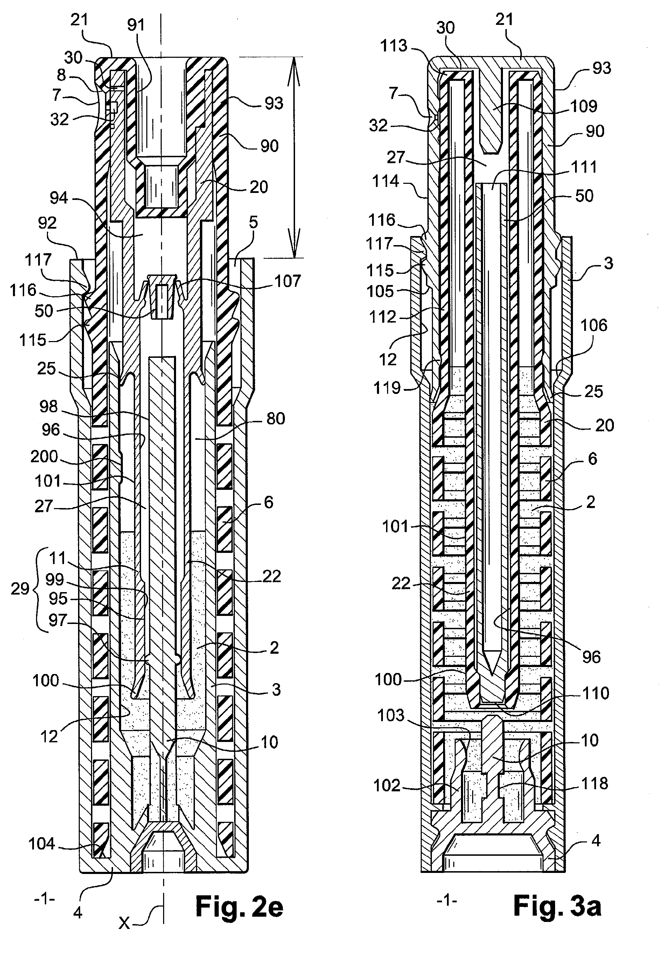

Selon le deuxième mode de réalisation, présenté Figures 3a-3c, la lèvre 100 est intégrée au pourtour extérieur 101 de la jupe 22 et c'est un bossage annulaire 103 présenté par la paroi intérieure 12 qui vient assurer un contact étanche avec la paroi extérieure 101 lisse de la jupe 22.

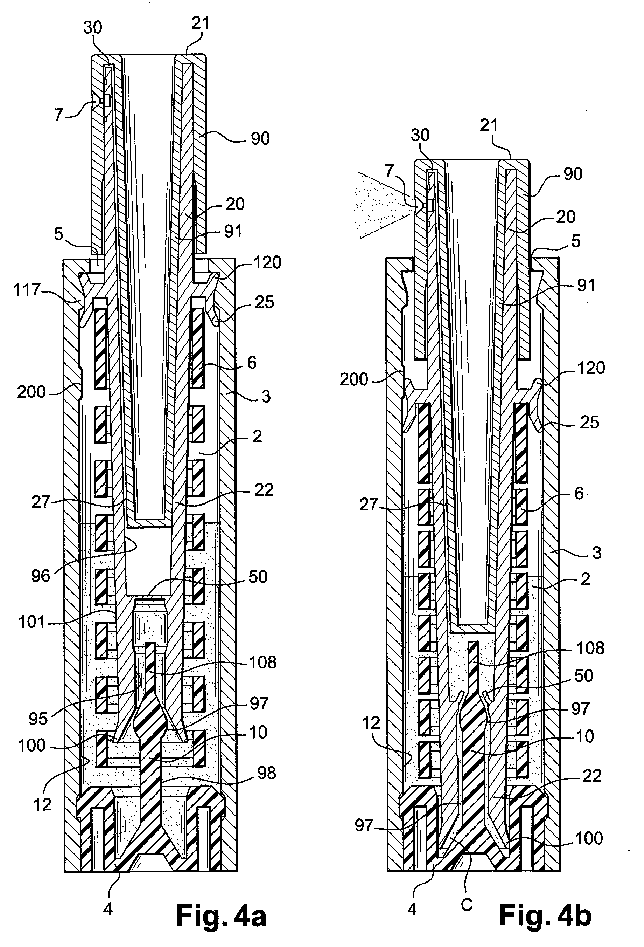

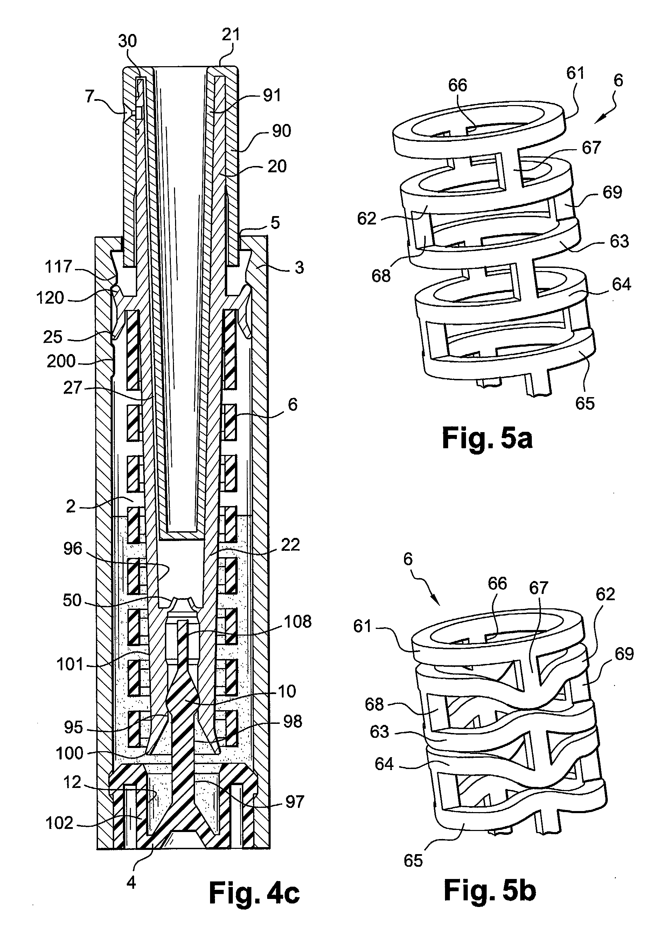

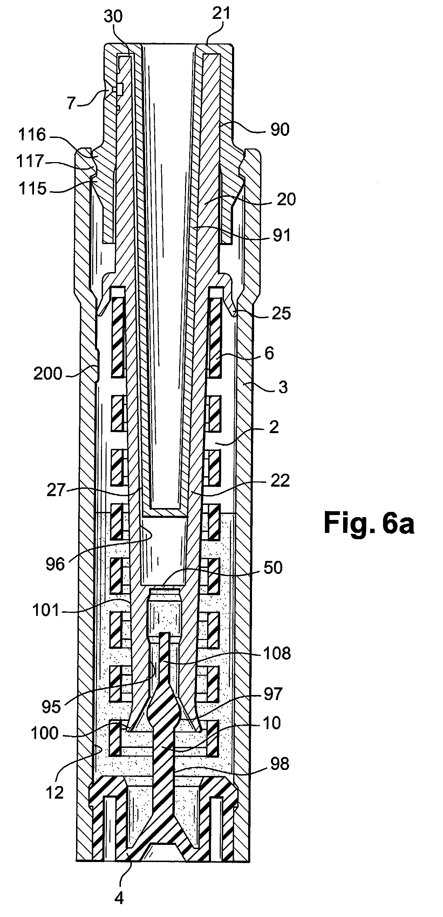

De préférence, le dispositif 1 comporte un moyen de rappel élastique 6, pour entraîner le retour automatique de l'organe mobile 20 de la deuxième position vers la première position. Ce ressort 6 est, selon un premier mode de réalisation Figures 2a-2e, présenté par l'organe d'actionnement 90 et coopère avec un pourtour latéral extérieur 104 du fond 4. Selon le deuxième mode de réalisation, Figures 3a-3c, le ressort 6 est présenté par l'organe mobile 20. Dans ce cas le ressort 6 est immergé dans le produit et coopère préférentiellement avec le fond 4, comme indiqué ci-après. Selon le troisième et le quatrième modes de réalisation, Figures 4a-4c et 6a, le ressort 6 est présenté par le fond 4, et notamment un élément rapporté sur ce fond 4; il coopère alors avec l'organe mobile 20, et peut également être immergé dans le produit.

Selon les premier et troisième modes de réalisation, l'organe mobile 20 est prévu pour s'insérer de façon serrante et étanche à l'intérieur du corps 3. Il comporte sur son pourtour extérieur 101 une lèvre supérieure annulaire 25 tournée vers le bas en s'évasant légèrement vers l'extérieur de manière à être en engagement étanche avec la paroi intérieure 12 du corps 3. En variante, Figures 3a-3c, le bouton poussoir 30 présente une lèvre telle que 25 pour assurer la même fonction d'étanchéité avec la paroi intérieure 12. En position de repos, dans la première position, la lèvre annulaire supérieure 25 délimite au-dessus du fond 4 un volume 80 qui, dans cette position, est maximal. De préférence ce volume 80 comporte une fraction de produit et une fraction d'air.

Du côté situé en regard de l'orifice de distribution 7, le passage radial 30 débouche dans un renfoncement de la surface externe de la jupe latérale 22. En position montée de l'ensemble, ce renfoncement est centré sur l'orifice de distribution 7 et définit avec la surface interne de l'organe d'actionnement 90, une pluralité de canaux tourbillonnaires 32 en communication avec l'orifice de pulvérisation 7 et avec le passage radial 30.

Un encliquetage peut être prévu entre l'organe mobile 20 et le corps 3, et ou entre l'organe d'actionnement 90 et ce corps 3 du récipient, de manière à améliorer l'accrochage respectif de l'un sur l'autre.

En considérant les schémas 2a à 2e, à l'utilisation, le consommateur exerce une pression axiale sur la surface 21 de l'organe d'actionnement 90. En réponse à cette pression axiale, le ressort 6 se comprime, et l'organe mobile 20 descend avec sa lèvre annulaire supérieure 25 en engagement étanche avec la paroi intérieure 12 du corps 3, alors que la lèvre 100 n'est pas encore en contact avec cette paroi 12.

Ce faisant, le volume 80, défini entre le fond 4 et l'organe mobile 20, diminue et le produit, qui y est contenu, est pressurisé et remonte, si ce n'est pas déjà le cas, jusqu'au niveau du système d'ouverture/fermeture 29 qui est encore en position fermée. D'ailleurs, ce système 29 est prévu suffisamment bas relativement à l'axe X pour que le seul déplacement de la première position à la deuxième position garantisse une remontée du produit jusqu'à la hauteur du système 29, quel que soit le volume de produit restant dans le récipient. Cette disposition permet de garantir que la chambre temporaire formera à chaque actionnement une dose d'un volume reproductible de produit.

Le mouvement d'enfoncement se poursuivant, la lèvre 100 entre en contact avec la paroi 12, la chambre temporaire est alors formée, et le produit situé dans la chambre temporaire, et celui situé dans le volume B défini entre la lèvre annulaire supérieure 25 et la lèvre 100 se pressurisent. Le volume B et le volume de la chambre C additionnés sont égaux au volume 80. A peine avant d'avoir atteint la deuxième position, i.e. l'enfoncement maximal, le système 29 passe en position ouverte, le produit de la chambre temporaire est éjecté dans le canal d'amenée 27, s'engouffre dans le passage radial 30, les canaux tourbillonnaires 32, et est pulvérisé via l'orifice de distribution 7.

La deuxième position est définie par une arrivée en butée 105 de l'organe d'actionnement 90, ou de l'organe mobile 20, contre une partie 106 du corps 3.

Lorsque le consommateur relâche la pression exercée sur la surface 21 (figure 2d), l'organe mobile 20, sous l'action du ressort 6, remonte axialement. Ce faisant, de l'air passe dans le récipient 2 par le canal d'amenée 27 avant que le système 29 ne se referme. A partir du moment où le système 29 est fermé, l'excroissance 97 cesse d'être en regard de la partie nervurée 11 et revient en engagement étanche avec la portion 99 située au-dessous de la partie nervurée 11. De l'air peut également entrer dans ce récipient par un espace formé momentanément, comme cela est expliqué ci-après, entre la paroi intérieure 12 et la lèvre annulaire supérieure 25.

A proximité de l'extrémité ouverte 5, l'épaisseur de la paroi intérieure 12 décroissant progressivement, et du fait de l'inertie du matériau formant la lèvre annulaire supérieure 25 de l'organe mobile, à la brusque poussée générée par le ressort 6, et à la légère dépression qui peut se créer à l'intérieur du récipient lorsque s'amorce le mouvement de remontée de l'organe mobile 20, le maintien d'un léger écartement entre le bord libre de la lèvre annulaire 25 de l'organe mobile 20 et la paroi intérieure 12 du corps 3 est favorisé, et ce pendant au moins une partie du mouvement de remontée de l'organe mobile 20. De l'air peut alors s'engouffrer à l'intérieur du récipient 2, de manière à rétablir un équilibre des pressions.

Par exemple, comme représenté sur les Figures 2a - 2e, la paroi intérieure 12 peut comporter un ergot 200, par exemple en forme d'excroissance longitudinale et radialement proéminente vers l'intérieur du corps 3, permettant de modifier localement le pourtour intérieur du récipient 2 de manière à désengager localement la lèvre annulaire supérieure 25 de cette paroi intérieure 12. Le contact étanche est alors rompu au passage de cet ergot 200. De préférence, l'ergot 200 est chanfreiné de telle sorte que son franchissement que ce soit lors du passage de la première position vers la seconde et inversement permette le décollement de la lèvre supérieure 25 de la paroi intérieure 12. De préférence, l'ergot 200 est prévu à proximité de l'atteinte de la seconde position, entre la position intermédiaire et la seconde décision, la lèvre supérieure 25 n'étant de préférence décollée qu'à partir du moment où la première lèvre 100 est en contact avec la paroi intérieure 12 et que la chambre intermédiaire C est formée. En particulier, cet ergot 200 a une forme de "grain de riz", et la paroi intérieure 12 comporte plusieurs ergots tels que 12 régulièrement espacés à un niveau annulaire du corps 3.

Lorsque l'organe mobile 20 atteint sa position haute (figure 2e), le bord libre de la lèvre annulaire supérieure 25 revient à nouveau en engagement étanche avec la paroi intérieure 12 du corps du récipient. Le volume 80 est à nouveau maximal. L'ensemble est prêt pour un nouvel actionnement.

Lors de l'actionnement suivant, tout se passe de la même manière, si ce n'est que le volume pressurisé par l'organe mobile est diminué du volume de produit qui a été distribué lors de l'actionnement précédent, celui-ci ayant été remplacé, éventuellement ou en partie seulement, par un volume d'air correspondant.

Bien que n'apparaissant pas clairement sur les dessins, dans la mesure où du liquide reste retenu, notamment par capillarité, à l'intérieur du canal d'amenée 27, notamment juste au-dessus du système 29, lors de l'actionnement suivant, la pulvérisation du produit est quasi-concomitante à l'enfoncement de la surface d'actionnement 21. Ce volume résiduel étant minime, il ne modifie pas de manière sensible la dose de produit délivré au cours d'une pulvérisation.

Dans le mode de réalisation qui vient d'être décrit, le moyen de rappel élastique 6 est configuré sous forme d'un ressort hélicoïdal. Dans la variante des figures 5A et 5B, la figure 5B correspondant à une vue du ressort 6 à l'état comprimé relativement à la figure 5A, le ressort 6 est configuré sous forme d'un empilement de plusieurs anneaux 61, 62, 63, 64, 65. Deux anneaux consécutifs 61, 62 sont maintenus à distance l'un de l'autre par deux entretoises 66, 67 diamétralement opposées, tandis que les anneaux 62 et 63 sont maintenus à distance l'un de l'autre par deux entretoises 58, 69, décalées de 90° par rapport aux entretoises 66, 67, et ainsi de suite sur la totalité de l'empilement.

En compression, et ainsi que représentés à la figure 5B, les anneaux 61-65 de l'empilement se rapprochent deux à deux les uns des autres, avec un rapprochement maximal, voire un contact, aux endroits situés à 90° par rapport aux entretoises.

Du fait du décalage à 90° des entretoises d'une paire d'anneaux avec les entretoises de la (ou des) paire(s) d'anneaux qui lui sont adjacente(s), l'empilement se comprime de manière uniforme.

En particulier lorsque le ressort 6 est obtenu de moulage d'un matériau thermoplastique, pour limiter son usure dans le temps, et notamment pour éviter tout phénomène de fluage de la structure du ressort, avant la toute première utilisation, le ressort 6 est disposé dans le récipient 2 dans un état non comprimé. Le dispositif 1 peut donc être stocké pendant une longue période sans perdre sa fonctionnalité. Même si la première utilisation ne survient que deux ans après le conditionnement d'un tel dispositif 1, le fonctionnement du ressort 6 sera encore optimum, son élasticité n'ayant encore jamais été sollicitée. Par ailleurs, étant donné le volume de produit contenu dans le récipient 2, la durée de vie d'un tel dispositif après la première utilisation étant courte, par exemple de l'ordre de deux mois, le ressort 6 peut être maintenu au moins légèrement comprimé, tout en présentant un fonctionnement optimum.

A cet effet, un pourtour extérieur 114 de l'organe mobile comporte au moins un double profil annulaire bombé 115, 116 pour coopérer avec un cran d'encliquetage 117 présenté sur la paroi intérieure 12. De préférence ce cran d'encliquetage 117 est présenté sur une section de la paroi 12 de plus large diamètre que la section contre laquelle la lèvre annulaire supérieure 25 s'applique. Le double profil est de préférence réalisé de manière à former deux bombements 115 et 116, à deux niveaux de hauteur différant relativement à l'axe X.

Figure 2a, le dispositif 1 est représenté avant la toute première utilisation, le cran d'encliquetage 117 étant bloqué entre les deux profils annulaires 115 et 116. L'intérêt du double profil annulaire est de permettre de bloquer la position de l'organe mobile 20 relativement au récipient 2 avant ladite première utilisation. Par la première utilisation, le profil annulaire supérieur 116 est entraîné en force sous le cran d'encliquetage 117. A partir de ce franchissement, le ressort 6 est alors comprimé. Ensuite une position haute de l'organe mobile 20, après cette première utilisation, Figure 2e, correspondra à une position dans laquelle le profil annulaire supérieur 116 est en butée sous le cran d'encliquetage 117, relativement à l'axe X. L'organe mobile 20 dépassera un peu moins du récipient 2 après cette première utilisation.

En variante, les positions respectives du cran d'encliquetage 117 et des profils annulaires 115 et 116 peuvent être inversés, le cran d'encliquetage étant alors prévu sur l'organe mobile 20 et le double profil annulaire sur la paroi intérieure 12. En variante encore, le cran d'encliquetage peut former un jonc annulaire d'encliquetage et le double profil peut être formé de deux crans non annulaires pour coopérer avec ledit jonc annulaire d'encliquetage.

En particulier, Figures 2a-2e; 3a-3c et 6a, le double profil annulaire est présenté sur le pourtour extérieur de l'organe d'actionnement 90. En variante, Figures 4a-4c, le double profil annulaire est présenté sur le pourtour extérieur 96 de la jupe 22, un des profils formant de plus la lèvre supérieure 25.

Alternativement, cette position préliminaire de stockage, avant la première utilisation, peut également être bloquée par un pont de matière (non représenté) formé entre le récipient 2 et l'organe mobile 20, ce pont de matière étant apte à être rompu lors de la première utilisation.

Le ressort selon la configuration qui vient d'être décrite en référence aux figures 5A et 5B peut être utilisé également pour tous les modes de réalisation de l'ensemble qui vont être décrits par la suite.

De préférence, le dispositif 1 selon l'invention est équipé d'un moyen 50 pour garantir l'étanchéité de l'orifice de distribution 7, avant même la première utilisation. Ce moyen 50 permet d'augmenter les garanties d'étanchéité déjà conférées par le système 29 qui est fermé dans cette position au repos. Ce moyen 50 est initialement scellé à l'intérieur de la jupe 22, au-dessus de l'élément 10. Ce moyen 50 peut également être un bouchon monté en force à l'intérieur de la jupe 22.

Ce moyen 50 doit laisser un passage au produit dans le canal d'amenée 27 dès la première pression exercée sur l'organe d'actionnement 90. Le moyen 50 étant, au cours de ce premier actionnement, encore solidaire de la jupe 22, celui ci est entraîné en direction de l'élément 10. Lorsque l'élément 10 vient au contact du moyen 50, une légère résistance se fait sentir au niveau de la surface d'actionnement 21. L'utilisateur doit alors fournir une pression légèrement plus forte pour que la liaison entre le moyen 50 et le pourtour intérieur de la jupe 22 se rompe, ou pour que le moyen 50 soit repoussé dans une zone de la jupe 22 de plus large diamètre intérieur. Le moyen 50 est alors libre dans cette zone, et lors des mouvements de l'organe mobile 20 de la première position vers la deuxième, le moyen 50 n'obture pas complètement le canal d'amenée 27.

Dans le cas où le moyen 50 est formé par un bouchon, comme cela est représenté Figure 2a, celui-ci a de préférence une forme chanfreinée telle que son pourtour extérieur le plus large soit en contact étanche à un niveau du pourtour intérieur 96 de la jupe 22. Ce pourtour intérieur 96 comporte de préférence, au-dessus de ce niveau de contact, une corolle 107 élastiquement déformable que peut traverser le moyen 50 lorsqu'il est repoussé par l'élément 10 vers le haut à l'intérieur de la jupe 22.

Dans une première variante, notamment représentée sur les Figures 4a-4c et 6a correspondant au troisième et respectivement quatrième modes de réalisation de l'invention, le moyen 50 peut être formé à partir d'un film disposé transversalement, de manière étanche, en contact avec le pourtour intérieur de la jupe 22, ce film pouvant être transpercé par l'élément 10, qui comporte alors une pointe 108, de manière à rompre l'étanchéité et à dégager définitivement le canal d'amenée 27, dès le premier actionnement.

Dans une deuxième variante, notamment représentée sur les Figures 3a-3c correspondant au deuxième mode de réalisation de l'invention, le moyen 50 peut être formé par un bouchon du type de celui présenté sur la Figure 2a, mais ici le bouchon est d'une longueur telle qu'en coopération avec l'élément 10, ce bouchon 50 peut être repoussé contre un moyen complémentaire 109 de l'organe d'actionnement 90, sur lequel il peut être retenu solidairement après le premier actionnement. Par exemple le moyen 50 présente une forme tubulaire obturée d'un premier côté pour assurer l'étanchéité initiale au niveau de la paroi intérieure 12, et ouverte d'un côté opposé pour coopérer avec le moyen complémentaire 109. L'élément 10 repousse ce moyen 50 en prenant appui sur le premier côté obturé 110, de manière à ce que le moyen complémentaire 109 vienne s'insérer en force, du côté ouvert 111, à l'intérieur de cette forme tubulaire. Cette variante permet de maîtriser la position de ce moyen 50 dans le canal d'amenée 27, notamment de l'immobiliser définitivement pour les déplacements ultérieurs de l'organe d'actionnement entre les première et deuxième positions.

La présence du moyen d'étanchéité 50 permet de réaliser un remplissage "tête en bas" du récipient 2, l'organe d'actionnement 90 et l'organe mobile 20 étant déjà montés dans le corps 3, ce corps 3 comportant une ouverture pour le remplissage au niveau du fond 4. Un bouchon est prévu pour obturer cette ouverture de remplissage. La jupe annulaire supérieure 25 assure également un joint étanche entre le corps 3 et l'organe mobile 20.

Le dispositif 1 décrit ci-dessus peut être réalisé en modifiant la position du ressort 6, et ou en modifiant la manière selon laquelle la chambre temporaire est formée, et ou en modifiant la position ou la structure de la lèvre annulaire supérieure 25, et ou en modifiant le système d'étanchéité initiale 50, et ou en modifiant la structure interne du récipient 2.

Les deuxième, troisième et quatrième modes de réalisation des figures respectivement 3a-3c; 4a-4c et 6a, constituent des variantes du premier mode de réalisation. Pour des raisons de clarté de l'exposé, ne seront décrits de manière détaillée que les éléments qui diffèrent du mode de réalisation précédent.

Par exemple, selon le deuxième mode de réalisation, figures 3a-3c, le fond 4 est fixé sur le corps 3 par encliquetage. Le ressort 6 est obtenu de moulage avec l'organe mobile 20, il baigne dans le produit. Le ressort 6 est surmontée d'une portion tubulaire 112 reliée au niveau d'un méplat 113 à une deuxième portion tubulaire formant la jupe 22, cette deuxième portion tubulaire est disposée à l'intérieur de la première portion tubulaire et comporte même une partie s'étendant à l'intérieur des spires du ressort 6. En effet, la jupe 22 est longue telle qu'une de ses extrémités est prévue pour être immergée dans le produit, au moins dans le cadre de la deuxième position.

L'organe d'actionnement 90 avec sa jupe latérale externe 91 en dessous de la surface d'actionnement 21, présente également une lèvre annulaire supérieure telle que 25 sur son pourtour extérieur 114 pour assurer l'étanchéité du récipient 2. Le passage radial 30 est formé directement entre le méplat 113 de l'organe mobile 20 et la surface d'actionnement 21.

Au niveau de ce pourtour extérieur 114, l'organe d'actionnement comporte au moins le double profil annulaire bombé 115, 116 pour coopérer avec le cran d'encliquetage 117 présenté sur la paroi intérieure 12. De préférence ce cran d'encliquetage est présenté sur une section de la paroi 12 de plus large diamètre que la section contre laquelle la lèvre annulaire supérieure 25 s'applique. Le double profil est de préférence réalisé de manière à former deux bombements 115 et 116, à deux niveaux de hauteur différant relativement à l'axe X. Figure 3a, le dispositif 1 est présenté avant toute première utilisation, un premier profil annulaire 115 étant bloqué sous le cran d'encliquetage 117. L'organe mobile est alors bloqué dans le récipient 2, entre le fond 4 et l'organe d'actionnement 90.

Dans cette position, le moyen 50 est disposé de manière étanche à l'intérieur de la jupe tubulaire 22.

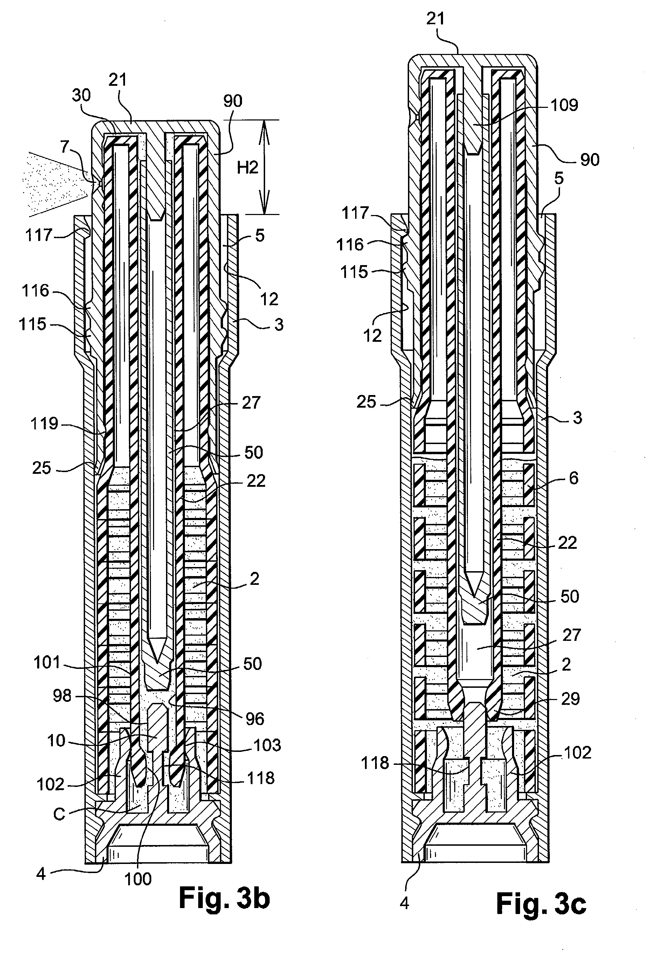

Le fond 4 comporte une portion tubulaire 102 se dressant relativement au fond 4, à l'intérieur du récipient 2. L'élément 10 est également dressé au milieu de cette portion tubulaire 102. Cette portion tubulaire 102 permet de proposer localement un mini-récipient de diamètre nettement inférieur à celui du corps 3. Elle comporte de plus un bourrelet annulaire 103 sur son pourtour intérieur, et forme ainsi l'équivalent de la paroi intérieure 12 destinée à coopérer avec le pourtour extérieur 101 de la jupe 22. En effet, comme cela est représenté Figure 3b, lorsque le dispositif 1 est descendu jusque dans la deuxième position, le ressort 6 est comprimé au maximum, le bourrelet annulaire 103 est au contact du pourtour extérieur 101 de la jupe 22, l'élément 10 a repoussé définitivement le moyen 50 sur le moyen complémentaire 109. Et le pourtour intérieur 96 de la jupe 22 n'est pas en contact étanche avec le pourtour extérieur 98 de l'élément 10, ce qui place le système 29 en position ouverte. D'ailleurs une pulvérisation de produit est obtenue.

Dans le cas présent, lorsque la jupe 22 descend relativement à la portion tubulaire 102, et relativement à l'élément 10, le pourtour extérieur 101 de la jupe vient, en premier, en contact avec le bourrelet intérieur 103, et à ce moment le pourtour intérieur 96 de la jupe 22 est encore en contact étanche avec l'élément 10 pour maintenir le système 29 fermé. Seulement à proximité de la deuxième position, l'élément 10 comportant une section 118 de plus faible diamètre à proximité du fond 4, le pourtour intérieur 96 de la jupe 22 se trouvant alors en vis-à-vis avec cette portion 118, le système 29 est ouvert et le produit pulvérisé.

Lorsque l'organe d'actionnement remonte dans sa première position, sous l'effet du ressort 6 de l'organe mobile 20, il ne remonte pas aussi haut que dans la position avant première utilisation, en effet, le deuxième bombement 116 vient en premier au contact du cran d'encliquetage 117 et limite ainsi la remontée. Le ressort 6 est par conséquent plus comprimé dans la première position, que dans la position avant première utilisation.

Selon la Figure 3c, il apparaît que le moyen initial d'étanchéité 50 est désormais solidaire du moyen d'actionnement 90, et est retenu par montage en force sur le moyen complémentaire 109. Le pourtour intérieur 96 de la jupe 22 est en contact étanche avec une extrémité de l'élément 10: le système 29 est donc fermé. Par contre, la jupe 22 est remontée suffisamment haut pour qu'elle ne soit plus en contact avec le bourrelet intérieur 103 de la portion tubulaire 102. Le liquide est par conséquent réparti de manière homogène au niveau du fond 4. Ce fond 4 est en particulier prévu pour qu'un volume défini dans le récipient 2, autour de la portion tubulaire 102, soit minimal, voire nul. Ainsi on limite la quantité de produit qui par gravité n'arrive pas à l'intérieur de la portion tubulaire 102.

L'intérêt de ce mode de réalisation est qu'il permet de présenter le corps 3 à l'intérieur duquel sont déjà monté l'organe d'actionnement 90 et l'organe mobile 20 sous une remplisseuse qui alors dépose, dans le récipient 2 "tête en bas", un volume défini de produit. Et il ne reste alors plus qu'à monter le bouchon rapporté pour former le fond 4 et finir la réalisation du dispositif 1. Dans le cas, où le récipient est rempli de cette manière, l'organe mobile 20 est monté dans la jupe latérale externe 91 de l'organe d'actionnement de manière à ce qu'un joint d'étanchéité 119 soit formé entre l'organe d'actionnement 90 et l'organe mobile 20, bien en dessous du niveau où l'orifice 7 est réalisé.

Selon le troisième mode de réalisation, Figures 4a-4c, le corps 3 comporte un fond rapporté 4 qui présente à l'intérieur du récipient un moyen ressort 6 avec lequel il est obtenu de moulage. Ce fond rapporté comporte également l'élément 10 de forme sensiblement cylindrique dressé dans le récipient 2, et une portion tubulaire de manière à diminuer localement le diamètre intérieur du corps 3.

Le ressort 6 vient en appui contre une collerette dépassant d'un pourtour extérieur de la jupe 22 formée par l'organe mobile 20. De cette collerette dépassent deux jupes inversement évasées. Une première jupe évasée du haut vers le bas définit la jupe annulaire supérieure 25, alors qu'une deuxième jupe évasée 120 du bas vers le haut définit un bombement destiné à coopérer avec un cran d'encliquetage 117 proposé sur la paroi intérieure 12 du corps 3.

Au cours de l'enfoncement en direction de la deuxième position, la deuxième jupe évasée passe sous le cran d'encliquetage 117. Le ressort 6 est comprimé jusqu'à ce qu'une chambre temporaire soit formée entre d'une part l'extrémité de la lèvre 100 de la jupe 22, et d'autre part le système 29 fermé. Le système 29 est obtenu par coopération entre la paroi intérieure 96 de la jupe 22 et le pourtour extérieur 98 de l'élément 10. Cette paroi intérieure 96 et le pourtour extérieur 98 présentent respectivement ou alternativement des reliefs 95 et 97 pour être en contact étanche ensemble et ce dans au moins certaines positions relativement à l'axe X.

Le quatrième mode de réalisation, Figure 6a, constitue une variante fidèle du troisième mode de réalisation, à la différence que la collerette dépassant du pourtour extérieur de la jupe 22 ne comporte qu'une seule jupe légèrement évasée de manière à définir uniquement la lèvre supérieure 25. Le cran d'encliquetage 117 est alors prévu sur le pourtour intérieur du récipient 2 selon ce quatrième mode de réalisation pour coopérer avec un double profil présenté sur le pourtour extérieur de l'organe d'actionnement 90 qui est ici prévu pour descendre au moins partiellement dans le récipient 2.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

En particulier, le dispositif peut être équipé au moins un deuxième ressort dont la force de compression est de préférence différente de celle du moyen de rappel élastique 6.

## Revendications

1. Ensemble (1) pour le conditionnement et la distribution d'un produit, notamment cosmétique, ledit ensemble comprenant
i) un récipient (2) contenant le produit, le récipient étant délimité par un corps (3) dont une extrémité est fermée par un fond (4) ;
ii) un organe (20) mobile relativement au corps du récipient et apte, en réponse à une commande exercée manuellement sur une surface (21) d'un organe d'actionnement (90), à passer d'une première position dans laquelle une première lèvre (100, 101) de l'organe mobile est à distance non nulle d'une paroi intérieure (12, 102), à une seconde position dans laquelle la première lèvre est en engagement avec ladite paroi intérieure,
**caractérisé en ce que** l'organe mobile comporte une lèvre supérieure (25) apte à s'appliquer de manière étanche contre ladite paroi intérieure sur au moins une partie de son mouvement de la première position vers la seconde position, la coopération entre la première lèvre et la paroi intérieure permettant, au moins lors de la première utilisation, d'isoler une fraction dudit produit et de comprimer cette fraction de manière à en provoquer la sortie au travers d'au moins un orifice de distribution (7), le retour de l'organe mobile de la seconde position vers la première, lorsque cesse la commande d'actionnement, s'accompagnant d'une entrée d'air à l'intérieur du récipient.

2. Ensemble (1) selon la revendication 1, **caractérisé en ce qu'**il comporte un moyen (50) pour assurer l'étanchéité avant la première utilisation, ce moyen pouvant être rendu solidaire (109) de l'organe d'actionnement après le premier actionnement.

3. Ensemble (1) selon l'une des revendications 1 à 2, **caractérisé en ce que** l'orifice de distribution (7) est en communication sélective, via un système d'ouverture/fermeture (29), avec au moins un canal d'amenée (27) en communication avec la dose de produit à l'intérieur du récipient.

4. Ensemble (1) selon la revendication 3, **caractérisé en ce que** le canal d'amenée (27) est délimité entre un élément (10) solidaire du corps du récipient, notamment obtenu de moulage avec ce dernier, et une jupe (22) solidaire de l'organe mobile, notamment obtenu de moulage avec ce dernier.

5. Ensemble (1) selon l'une des revendications 3 à 4, **caractérisé en ce que** le système d'ouverture/fermeture (29) est formé par la coopération d'un élément (10) solidaire du corps du récipient, notamment obtenu de moulage avec ce dernier, et d'un élément solidaire (22) de l'organe mobile, notamment obtenu de moulage avec ce dernier.

6. Ensemble (1) selon l'une des revendications 1 à 5, **caractérisé en ce que** la première lèvre est soumise à une contrainte élastique augmentant en direction de la seconde position.

7. Ensemble (1) selon l'une des revendications 1 à 6, **caractérisé en ce que** le récipient présente un rétrécissement de son pourtour intérieur, notamment à proximité du fond, la première lèvre venant au contact de ce rétrécissement.

8. Ensemble (1) selon l'une des revendications 1 à 7, **caractérisé en ce que** la paroi intérieure (12) est de section transversale circulaire, la première lèvre (100) étant annulaire, la distance entre un axe longitudinal (X) de l'ensemble et ladite paroi intérieure diminuant, de préférence progressivement, en direction du mouvement de la première position vers la seconde.

9. Ensemble (1) selon l'une des revendications 1 à 8, **caractérisé en ce que** la paroi intérieure du récipient comporte une deuxième lèvre pour coopérer avec un élargissement du pourtour extérieur (101) de l'organe mobile, l'organe mobile étant configuré de sorte que, sur au moins une partie de son mouvement entre lesdites première et seconde positions, la deuxième lèvre est en contact étanche avec ce pourtour extérieur (101).

10. Ensemble (1) selon l'une des revendications 1 à 9, **caractérisé en ce que** la dose est reproductible et correspond par exemple à un volume de 1/10^{ème} à 1/20^{éme} du volume de produit contenu dans le récipient.

11. Ensemble (1) selon l'une des revendications 1 à 10, **caractérisé en ce que** le volume de produit contenu initialement dans le récipient correspond à un volume de ¹/₃ à ²/₃ du volume intérieur (80) défini dans la première position entre l'organe mobile et le fond du récipient.

12. Ensemble (1) selon l'une des revendications 1 à 11, **caractérisé en ce que** la lèvre supérieure garantit l'étanchéité du réservoir dans la première position.

13. Ensemble (1) selon l'une des revendications 1 à 12, **caractérisé en ce que** l'entrée d'air à l'intérieur dudit volume se fait par au moins un passage formé entre l'organe mobile et la paroi intérieure du récipient, et notamment un passage ménagé entre la lèvre supérieure et la paroi intérieure.

14. Ensemble (1) selon l'une des revendications 1 à 13, **caractérisé en ce que** la paroi intérieure comporte un ergot (200) configuré pour rompre le contact étanche réalisé avec la lèvre supérieure, suite à son franchissement au moins lors du passage de la seconde position à la première.

15. Ensemble (1) selon l'une des revendications 1 à 14, **caractérisé en ce que** le retour de l'organe mobile (20) de la seconde position vers la première résulte de l'action d'un moyen de rappel élastique (6).

16. Ensemble (1) selon la revendication 15, **caractérisé en ce qu'**une extrémité du moyen de rappel élastique est en butée contre le fond du récipient.

17. Ensemble (1) selon l'une des revendications 15 à 16, **caractérisé en ce que** le moyen de rappel élastique (6) est obtenu de moulage avec le corps du récipient, et ou avec l'organe d'actionnement, et ou l'organe mobile disposé entre le récipient et l'organe d'actionnement.

18. Ensemble (1) selon l'une des revendications 15 à 17, **caractérisé en ce que** le moyen de rappel élastique (6), ainsi que tout élément obtenu de moulage avec ce dernier, est réalisé en POM ou en polypropylène ou en polyéthylène.

19. Ensemble (1) selon l'une des revendications 15 à 18, **caractérisé en ce que** le moyen de rappel élastique (6) est configuré sous forme d'un empilement d'au moins trois anneaux (61-65) reliés deux à deux via deux entretoises (66) diamétralement opposées, les entretoises (66) séparant un premier anneau (61) d'un second anneau (62) adjacent au premier étant décalées à 90° par rapport aux entretoises (68, 69) séparant le second anneau (62) d'un troisième anneau (63) adjacent au second et disposé du côté du second opposé au premier.

20. Ensemble (1) selon l'une des revendications 15 à 16, **caractérisé en ce que** le moyen de rappel élastique (6) est constitué d'un ressort rapporté (406), notamment en plastique ou en métal.

21. Ensemble (1) selon l'une des revendications 1 à 20, **caractérisé en ce que** l'organe mobile (20), et en particulier la première lèvre (100), est réalisé en au moins une polyoléfine, notamment un polyéthylène.

22. Ensemble (1) selon l'une des revendications 1 à 21, **caractérisé en ce que** le fond du récipient est un fond rapporté, la fixation du fond sur le corps du récipient étant obtenue notamment par encliquetage, vissage, collage ou soudage.

23. Ensemble (1) selon l'une des revendications 1 à 22, **caractérisé en ce que** l'orifice de distribution est alimenté par une pluralité de canaux à effet tourbillonnaire (32).

24. Ensemble (1) selon l'une des revendications 1 à 23, **caractérisé en ce qu'**avant la première utilisation, le moyen de rappel élastique est non comprimé dans le récipient.

25. Ensemble (1) selon l'une des revendications 1 à 24, **caractérisé en ce que** le récipient comporte un cran d'encliquetage (117) destiné à coopérer avec un profil complémentaire (115, 116) de l'organe mobile de manière à immobiliser cet organe mobile relativement au récipient avant la première utilisation.
